# EUROPEAN PATENT SPECIFICATION

(11) **EP 2 773 539 B1**
(45) Date of publication and mention of the grant of the patent: **10.04.2019**
(21) Application number: 12778107.8
(22) Date of filing: 24.10.2012
(51) Int. Cl.: B60S 1/34

(54) **PANTOGRAPH FOR WINDSHIELD WIPERS, ESPECIALLY AUTOMOTIVE ONES, AND AN ADAPTER FOR THE PANTOGRAPH**
STROMABNEHMER FÜR SCHEIBENWISCHER, INSBESONDERE FÜR AUTOS, UND ADAPTER FÜR DEN STROMABNEHMER
PANTOGRAPHE POUR DES ESSUIE-GLACES, SPÉCIALEMENT POUR DES ESSUIE-GLACES D'AUTOMOBILE, ET ADAPTATEUR POUR LE PANTOGRAPHE

(30) Priority: 02.11.2011 PL 39685611
(43) Date of publication of application: 10.09.2014
(73) Proprietor: Valeo Autosystemy SP. Z.O.O., 32-050 Skawina (PL)
(72) Inventor: ORZEL, Wojciech, PL- 32-050 Skawina (PL)
(74) Representative: Callu-Danseux, Violaine
(86) International application number: PCT/EP2012/071044
(87) International publication number: WO 2013/064404

(56) References cited:
- DE-A1-102004 016 251
- DE-A1-102008 001 938
- FR-A1- 2 922 841
- GB-A- 1 234 040
- GB-A- 2 195 235

## Description

The subject of the invention is a pantograph for windshield wipers, especially automotive ones, comprising a main arm, designed for fastening to a main shaft, and an auxiliary arm, designed for fastening to an auxiliary shaft, comprising an auxiliary rod and an adapter for fastening the auxiliary rod to the auxiliary shaft. The invention also includes an adapter for the wiper pantograph, especially for automotive wipers, and an auxiliary rod designed to snap onto this adapter. The invention finds application in all systems of wipers, such as those used in automobiles, railways, airplanes or ships.

In the prior art a type of wiper arm or pantograph is known. This is a mechanism that moves the wipers over the windshield. It operates in such a way that the two arms moving the wipers over the windshield is joined together by means of a tie and secures the wipers to them near the place of this joint. One distinguishes between the main arm, which is fastened by a mount and a flange on a main shaft, able to turn at the hub, and an auxiliary arm, fastened to an auxiliary shaft. An electric motor, connected to the main shaft, places the wiper in motion. The pantograph is necessary to wipe an area on the windshield properly, as defined by the provisions of law or additional requirements of the vehicle maker. Fastening of the wiper on only one arm (i.e., without use of the pantograph) would mean that the wiper moves along the fragment of a circle and does not always wipe the required area.

In a certain class of pantographs known in the prior art, the links between the main arm and the main shaft (usually via a flange) and between the auxiliary arm in the auxiliary shaft (via a flange or other fastening element) are of the kind that a stable deflection of the wiper arm from the windshield is not possible. Usually, one can only deflect the wiper arm slightly, by an angle of several degrees. This is a major defect, e.g., when it is necessary to replace the wiper blade or repair the mechanism. In return, the design of the pantograph in this case is relatively simple - it contains a few parts, of little overall weight. Such a solution is also known, e.g., from U.S. patent No. 5 634 234.

To provide a stable and advantageous service position, i.e., one in which the wiper arm remains deflected far from the windshield and remains in this position for the time of making the repair, one uses pantographs in which the main arm is fastened by a mount to the flange by means of a pair of rivets and a pair of bearings, forming a kind of hinge, thanks to which the mount can turn relative to the flange. By performing such a turning, one can deflect the wiper arm far from the windshield, as much as the design and the fastening of the auxiliary arm allows. Sine the mount is an element most often cold-shaped, and thus requiring costly tools for its fabrication, the makers of vehicles try to use the same mount in the auxiliary arm, and consequently - and most simply - the same or a similar flange, which is likewise a costly element, and rather massive. The auxiliary flange is also connected to the auxiliary arm by a hinge (e.g., rivet + bearing). While pantographs based on the principle of a simple doubling of the main arm enable a favorable service position, they are characterized by a complicated design and a large number of necessary parts, which are quite heavy and costly.

The international patent application published as number WO/2009/056428 (application No. PCT/EP2008/063511) discloses a pantograph in which the mount of the main arm is connected with a standard massive flange by means of rivets and bearings. In turn, the auxiliary arm is fastened to the auxiliary shaft by a special coupling. This coupling has on one side a groove designed to accommodate the auxiliary rod, and on the other side and at right angles to said groove it has a socket designed to fat a round bolt. This bolt in turn is secured to a ring, able to turn on the auxiliary shaft. Thanks to this solution, an advantageous service position is ensured. However, the drawback of the solution disclosed in WO/2009/056428 remains the complicated connections, the use of a large number of parts costly to fabricate, and the weight of the overall assembly.

Yet other solutions are known, e.g., from international patent application published as number WO07/093957, or from Japanese patent application No. JP 2010 888832. DE-A-102008001938 shows the preamble of claim 1.

Thus far, there is no known pantograph design for automotive wipers that minimizes the number of required fastening elements, their weight and the cost of fabrication, while at the same time ensuring an advantageous and stable service position (i.e., one in which the wiper arm and the wiper are firmly deflected from the vehicle's windshield).

The providing of such a pantograph is the goal of the present invention.

The invention is disclosed in claim 1. The adapter has a socket for fitting the auxiliary shaft in it and an undercut made in the lateral surface of the adapter and connected to the aforesaid socket, wherein the undercut is of such a size that it can contain the auxiliary shaft.

The adapter has a groove designed to hold the auxiliary rod.

Advantageously, the adapter has ribs for introducing the auxiliary rod into the aforesaid groove.

Advantageously, the adapter has a base for positioning the auxiliary rod in the aforesaid groove, while the auxiliary rod has a recess at its tip, shaped to fit the base.

According to the invention, the adapter has a tongue, while the auxiliary rod has a projection, wherein the tongue and the projection are situated so that a snap connection of the auxiliary rod to the adapter is made possible, being formed by the tongue and projection.

Advantageously, the adapter has a socket designed for the spherical tip of the auxiliary shaft.

Advantageously, the adapter is made of plastic.

Advantageously, the main arm is connected by a mount with flange, designed for securing to the main shaft, while the mount is connected to the flange by a hinge, advantageously formed by rivets and bearings.

In one unclaimed embodiment, the adapter and auxiliary rod are a single, integrally formed part.

The invention includes an adapter for a pantograph for wipers, especially automotive wipers, characterized in that it has a socket for fitting the auxiliary shaft in it and an undercut made in the lateral surface of the adapter and connected to the aforesaid socket, wherein the undercut is of such a size that it can contain the auxiliary shaft.

Advantageously, the adapter has a base for positioning the auxiliary rod in the aforesaid groove.

According to the invention, the adapter has a tongue for snap fastening of the auxiliary rod.

The pantograph according to the invention minimizes the number of necessary elements, their weight and cost of manufacture, while at the same time ensures an advantageous and stable service position.

In addition, thanks to the decreased total weight of the elements needed to manufacture the pantograph of the invention also reduces the emission of CO2 connected with the operation of the pantograph.

The invention shall now be presented more closely in an advantageous sample embodiment, referring to the enclosed drawings, where:
Fig. 1-3 show photographs of a piece of the pantograph according to the invention in an advantageous sample embodiment,
Fig. 4 displays the connection of the auxiliary arm to the auxiliary shaft by the adapter, in the service position,
Fig. 5 displays the adapter according to the invention in an advantageous sample embodiment,
Fig. 6 is a longitudinal section through the adapter shown in Fig. 5, and
Fig. 7 is a close-up view of the connection of the auxiliary arm and the auxiliary shaft via the adapter, in the working position.

The following designations are used in the figures: 1 - mount of the main arm, 2 - flange of the main arm, 3 - main shaft, 4 - hub, 5 - auxiliary shaft, 6 - adapter, 7 - auxiliary rod, 8 - undercut, 9 - socket, 10 - tongue, 11 - ribs, 12 - base for positioning of the auxiliary rod, 13 - recess at the end of the auxiliary rod, 14 - projection on the auxiliary rod.

### Advantageous sample embodiment of the invention

A pantograph for automotive wipers is produced, consisting of a main arm, designed for placement on a main shaft 3, and an auxiliary arm, whose rod 7 is fastened to an auxiliary shaft 5 by means of an adapter 6, made of plastic. In the sample embodiment shown, the auxiliary shaft 5 terminates in a spherical tip, while the adapter 6 has a socket 9 whose shape is adapted to contain said spherical tip in it. Alternatively, however, one can use a termination of any other shape known to the skilled person.

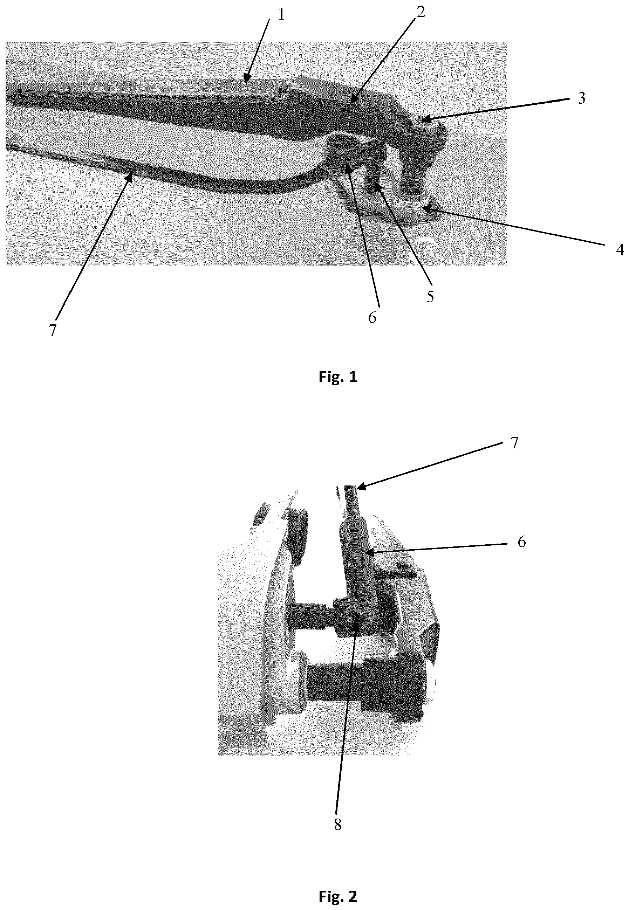

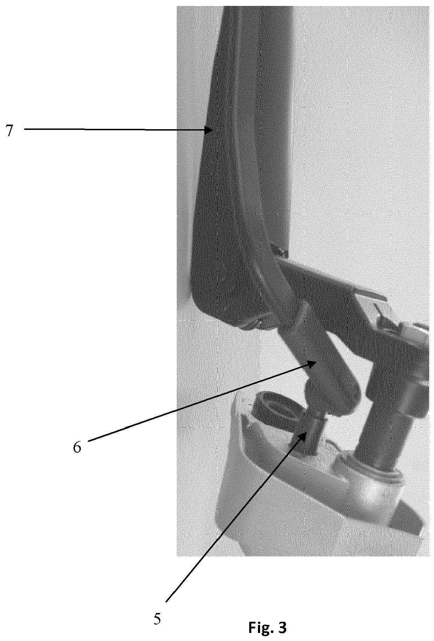

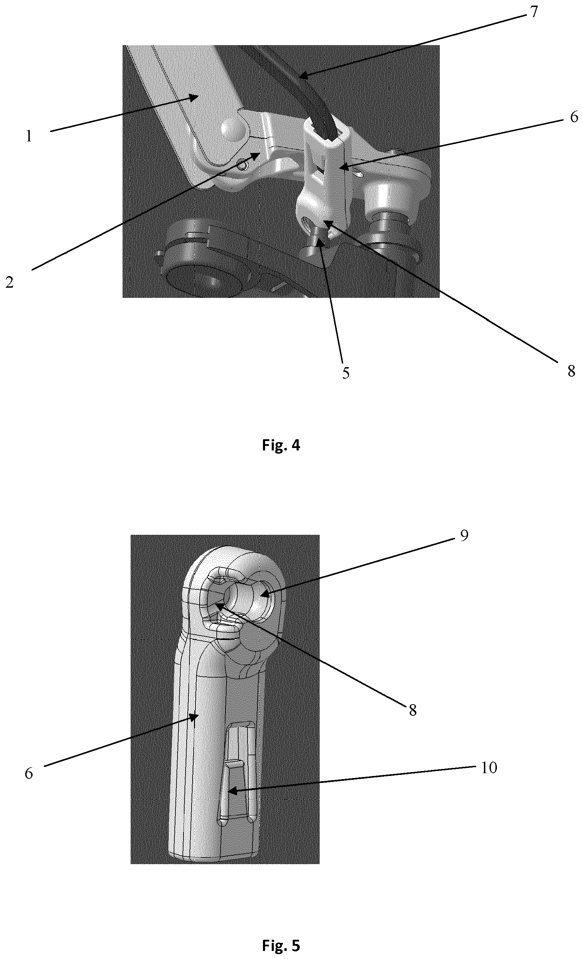

As mentioned, the adapter 6 (Fig. 5) has a socket 9 for seating the auxiliary shaft 5. The essence of the present invention lies in that the adapter 6 has furthermore an undercut 8 made in the lateral surface of the adapter 6, which is connected to the socket 9, wherein the undercut 8 is of such size that it can contain the auxiliary shaft 5. Thanks to this solution, the auxiliary shaft lies in the socket in the working position (e.g., Fig. 1, 2 and 7), but when need by the adapter 6 can be turned relative to the auxiliary shaft 5 so that the auxiliary shaft 5 is located in the aforementioned undercut 8. In this way, a stable and advantageous service position is assured for the wipers - Fig. 3 and 4. The shape of the undercut 8, such as can be seen in Fig. 5, is only an example. It is obvious to skilled persons that the undercut 8 can also have a different shape, as long as it fulfills the conditions mentioned in this paragraph.

Obviously, the main arm of the pantograph also ensures this service position. In the sample embodiment presented here, the main arm is seated by the mount 1 on the flange 2, which in turn serves for fastening to the main shaft 3, which is seated in the hub 4. The mount 1 is connected to the flange 2 by a hinge, which is formed - for example - by rivets and bearings. Alternatively, however, one could use any other connection of the mount 1 and flange 2 that is known to skilled persons and that allows the mount 1 to turn relative to the flange 2, and thereby move the main arm into the service position.

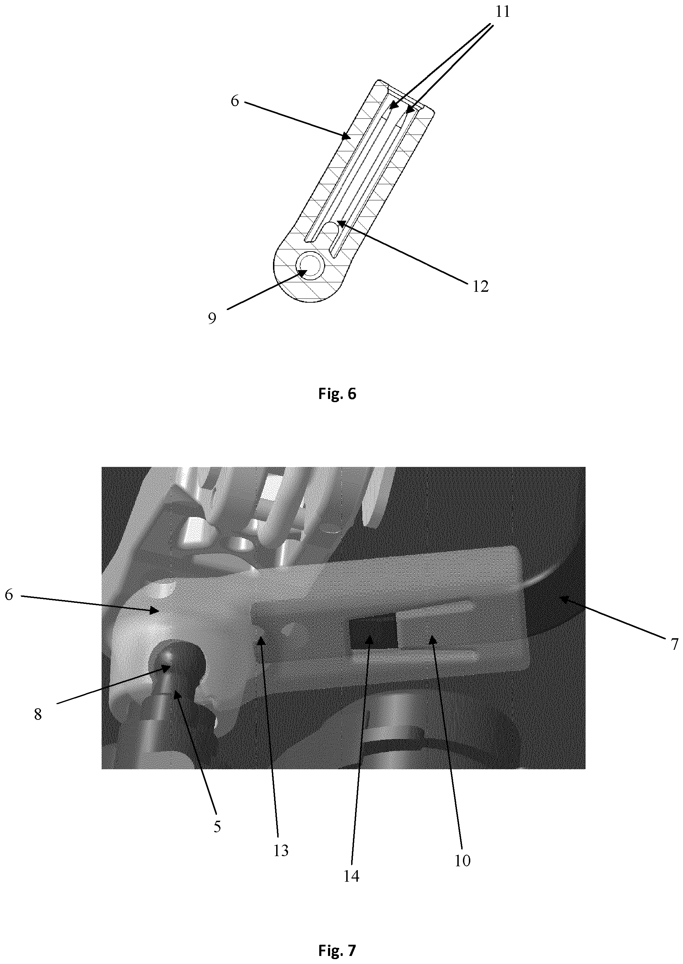

In the adapter 6 shown (Fig. 5 and 6), there is a groove designed to hold the auxiliary rod 7. The groove is provided with ribs 11 to lead the auxiliary rod 7 in (Fig. 5). Furthermore, a base 12 is made in the adapter 6 in the form of a semicircular projection, for positioning the auxiliary rod 7 in the groove, while the auxiliary rod 7 has been devised so that it has a recess 13 at its tip, whose shape fits the base 12. The ribs 11, base 12 and recess 13 serve for the precise and firm fastening of the auxiliary rod 7 in the adapter 6. Any play in this fastening would cause unwanted knocking of the wipers during operation, such as noise. The shape of the base 12 and undercut 13 shown here is only an example and in no way limits the present invention. It is obvious to the skilled person that other shapes of the base 12 and recess 13 can be used alternatively. Furthermore, a reversal of the base is possible, the so-called adapter can contain a base in the form of a recess/opening/cavity, while the auxiliary rod 7 can contain a projection at its tip, shaped to fit such a base.

In addition, the adapter 6 has been provided with a tongue 10, while the auxiliary rod 7 has a projection 14, thanks to which a precise and tight snap-connection of the adapter 6 to the auxiliary rod 7 is possible, formed by the aforementioned elements 10, 14 ("snap fit" in English). From the standpoint of a snap fastening, a precision mounting of the auxiliary rod 7 in the adapter 6 is also extremely important. The aforementioned elements 11, 12 and 13 help with this. It is particularly advantageous to devise the auxiliary rod 7 such that the recess 13 and the projection 14 are fabricated in the same technological process, which guarantees the repeated fitting required for a snap connection.

As for the material from which the adapter is made, typically this is plastic, and especially materials with good tribological properties, such as PA6, PA66, POM, PA12, and also melts of materials or materials with admixtures. Alternatively, one can use other materials known to the skilled person, especially metals or their alloys. In such a case, it is best to make the adapter 6 by the overmolding method. Adapters made by the overmolding method are known in the prior art, but they do not realize the function of a stable service position.

In one unclaimed embodiment, it is proposed to make the adapter 6 and the auxiliary rod 7 as a single, integrally formed element.

## Claims

1. Adapter for a pantograph for wipers, especially automotive wipers, **characterized in that** it has a socket (9) for fitting an auxiliary shaft (5) in it and an undercut (8) made in the lateral surface of the adapter (6) and connected to the aforesaid socket (9), wherein the undercut (8) is of such a size that it can contain the auxiliary shaft (5), said adapter having a groove designed to hold an auxiliary rod (7) in it, and **characterized in that** it has a tongue (10) for snap fastening of the auxiliary rod (7).

2. Adapter according to claim 1, **characterized in that** it has ribs (11) for introducing the auxiliary rod (7) into the aforesaid groove.

3. Adapter according to claim 1 or 2, **characterized in that** it has a base (12) for positioning the auxiliary rod (7) in the aforesaid groove.

4. Adapter according to any of the preceding claims, **characterized in that** it has a socket (9) designed for the spherical tip of the auxiliary shaft (5).

5. Adapter according to any of the preceding claims, **characterized in that** it is made of plastic.

6. Pantograph for wipers, especially automotive wipers, comprising a main arm, designed for fastening to a main shaft, and an auxiliary arm, designed for fastening to an auxiliary shaft, the auxiliary arm comprising an auxiliary rod and an adapter according to any of the preceding claims for fastening the auxiliary rod to the auxiliary shaft.

7. Pantograph according to claim 6, **characterized in that** the adapter (6) has a base (12) for positioning the auxiliary rod (7) in the aforesaid groove, while the auxiliary rod (7) has a recess (13) at its tip, shaped to fit the base (12).

8. Pantograph according to any of the preceding claims 6 or 7, **characterized in that** the adapter (6) has a tongue (10), while the auxiliary rod (7) has a projection (14), wherein the tongue (10) and the projection (14) are situated so that a snap connection of the auxiliary rod (7) to the adapter (6) is made possible, being formed by the tongue (10) and projection (14).

9. Pantograph according to any of the preceding claims 6 to 8, **characterized in that** the main arm is connected by a mount (1) with flange (2), designed for securing to the main shaft (3), while the mount (1) is connected to the flange (2) by a hinge, advantageously formed by rivets and bearings.

## Patentansprüche

1. Adapter für einen Stromabnehmer für Wischer, insbesondere Autoscheibenwischer, **dadurch gekennzeichnet, dass** er eine Buchse (9) zur Anordnung eines Hilfsschafts (5) darin und eine Hinterschneidung (8), die in der Seitenfläche des Adapters (6) hergestellt ist und mit der Buchse (9) verbunden ist, aufweist, wobei die Hinterschneidung (8) eine solche Größe aufweist, dass sie den Hilfsschaft (5) aufnehmen kann, wobei der Adapter eine Nut aufweist, die dazu ausgeführt ist, eine Hilfsstange (7) darin zu halten, und **dadurch gekennzeichnet, dass** er eine Zunge (10) zur Schnappbefestigung der Hilfsstange (7) aufweist.

2. Adapter nach Anspruch 1, **dadurch gekennzeichnet, dass** er Rippen (11) zum Einführen der Hilfsstange (7) in die Nut aufweist.

3. Adapter nach Anspruch 1 oder 2, **dadurch gekennzeichnet, dass** er eine Basis (12) zum Positionieren der Hilfsstange (7) in der Nut aufweist.

4. Adapter nach einem der vorhergehenden Ansprüche, **dadurch gekennzeichnet, dass** er eine Buchse (9) aufweist, die für die sphärische Spitze des Hilfsschafts (5) ausgeführt ist.

5. Adapter nach einem der vorhergehenden Ansprüche, **dadurch gekennzeichnet, dass** er aus Kunststoff hergestellt ist.

6. Stromabnehmer für Wischer, insbesondere Autoscheibenwischer, umfassend einen Hauptarm, der zum Befestigen an einem Hauptschaft ausgeführt ist, und einen Hilfsarm, der zum Befestigen an einem Hilfsschaft ausgeführt ist, wobei der Hilfsarm eine Hilfsstange und einen Adapter nach einem der vorhergehenden Ansprüche zum Befestigen der Hilfsstange an dem Hilfsschaft umfasst.

7. Stromabnehmer nach Anspruch 6, **dadurch gekennzeichnet, dass** der Adapter (6) eine Basis (12) zum Positionieren der Hilfsstange (7) in der Nut aufweist, wobei die Hilfsstange (7) an ihrer Spitze eine Ausnehmung (13) aufweist, die zum Anordnen der Basis (12) geformt ist.

8. Stromabnehmer nach einem der vorhergehenden Ansprüche 6 oder 7, **dadurch gekennzeichnet, dass** der Adapter (6) eine Zunge (10) aufweist, wobei die Hilfsstange (7) einen Vorsprung (14) aufweist, wobei die Zunge (10) und der Vorsprung (14) so positioniert sind, dass eine Schnappverbindung der Hilfsstange (7) mit dem Adapter (6) ermöglicht wird, die durch die Zunge (10) und den Vorsprung (14) gebildet wird.

9. Stromabnehmer nach einem der vorhergehenden Ansprüche 6 bis 8, **dadurch gekennzeichnet, dass** der Hauptarm durch einen Halter (1) mit einem Flansch (2) verbunden ist, der zum Fixieren an dem Hauptschaft (3) ausgeführt ist, wobei der Halter (1) durch ein vorteilhafterweise durch Niete und Lager gebildetes Scharnier mit dem Flansch (2) verbunden ist.

## Revendications

1. Adaptateur pour un pantographe pour essuie-glace, en particulier essuie-glace d'automobiles, **caractérisé en ce qu'**il présente une douille (9) destinée à recevoir un arbre auxiliaire (5) dans celle-ci et une contre-dépouille (8) réalisée dans la surface latérale de l'adaptateur (6) et connectée à ladite douille (9), la contre-dépouille (8) ayant une dimension lui permettant de recevoir l'arbre auxiliaire (5), ledit adaptateur présentant une gorge conçue pour retenir une tige auxiliaire (7) dans celle-ci, **caractérisé en ce qu'**il présente une langue (10) pour l'encliquetage de la tige auxiliaire (7).

2. Adaptateur selon la revendication 1, **caractérisé en ce qu'**il présente des nervures (11) pour l'introduction de la tige auxiliaire (7) dans ladite gorge.

3. Adaptateur selon la revendication 1 ou 2, **caractérisé en ce qu'**il présente une base (12) pour positionner la tige auxiliaire (7) dans ladite gorge.

4. Adaptateur selon l'une quelconque des revendications précédentes, **caractérisé en ce qu'**il présente une douille (9) conçue pour la pointe sphérique de l'arbre auxiliaire (5).

5. Adaptateur selon l'une quelconque des revendications précédentes, **caractérisé en ce qu'**il est fabriqué en plastique.

6. Pantographe pour essuie-glace, en particulier essuie-glace d'automobile, comprenant un bras principal conçu pour être attaché à un arbre principal, et un bras auxiliaire conçu pour être attaché à un arbre auxiliaire, le bras auxiliaire comprenant une tige auxiliaire et un adaptateur selon l'une quelconque des revendications précédentes pour attacher la tige auxiliaire à l'arbre auxiliaire.

7. Pantographe selon la revendication 6, **caractérisé en ce que** l'adaptateur (6) présente une base (12) pour positionner la tige auxiliaire (7) dans ladite gorge, tandis que la tige auxiliaire (7) présente un renfoncement (13) au niveau de sa pointe, dimensionné de manière à y ajuster la base (12) .

8. Pantographe selon l'une quelconque des revendications 6 et 7, **caractérisé en ce que** l'adaptateur (6) présente une langue (10), tandis que la tige auxiliaire (7) présente une saillie (14), la langue (10) et la saillie (14) étant situées de telle sorte qu'une connexion par encliquetage de la tige auxiliaire (7) à l'adaptateur (6) soit possible, laquelle est formée par la langue (10) et la saillie (14).

9. Pantographe selon l'une quelconque des revendications précédentes 6 à 8, **caractérisé en ce que** le bras principal est connecté par une fixation (1) avec une bride (2) conçue pour fixer la fixation à l'arbre principal (3), la fixation (1) étant connectée à la bride (2) par une articulation, avantageusement formée par des rivets et des paliers.
